# EUROPEAN PATENT APPLICATION

(11) **EP 0 848 049 A1**
(43) Date of publication of application: **17.06.1998**
(21) Application number: 96120081.3
(22) Date of filing: 13.12.1996
(51) Int. Cl.: C09K 3/10, F16J 15/00, B64D 37/06

(54) **Fuel tank gasket and method for its manufacture**

(71) Applicant: W.L. GORE & ASSOCIATES GmbH, 85636 Putzbrunn (DE)
(72) Inventor: Wiesemann, Amadeus, 91166 Georgensgmünd (DE); Burmann, Gerhard, 91174 Spalt (DE); Rüsch, Hans-Jörg, 85521 Ottobrunn (DE)
(74) Representative: Harrison, Robert John

(57) **Abstract**

A fuel tank gasket (20) which before use consists essentially of a) 30-90 % by weight porous base material and b) 10-70% by weight additive having the requirements that it is compatible with said porous material is taught. The porous base material of the gasket (20) is preferably expanded polytetrafluoroethylene and the additive is selected from the group consisting of perfluoropolyethers, polysiloxane, butadiene-acrylonitrile co-polymers, polyesters, polyethers as well as functionalised and fluorinated derivatives thereof. Preferably the additive is perfluoropolyether or a functionalised derivative thereof

A method for manufacture of the said fuel tank gasket comprising the following steps is furthermore described:
a) a first step of manufacturing a porous base material (90)
b) a second step of preparing an additive (70), in fluid phase
c) a third step of applying said additive (70) to said porous base material (90)
d) a fourth step of drying the base fuel tank gasket (90).

The fuel tank gasket (20) is used in transportation vehicles, such as an aircraft, for ensuring that fuel (7) does not leak out of the fuel tank (5) and water does not enter the fuel tank (5) and contaminate the fuel (7) therein.

## Description

The invention relates to a fuel tank gasket and a method for its manufacture.

A modern aircraft contains a number of fuel tanks situated, for example, in the wings of the aircraft. These fuel tanks are constructed with plastic, carbon-reinforced plastic, glass fibre or metal panels which can be opened in order to allow access into the fuel tank. These panels have to be sealed from the outside environment in order to ensure, for example, that water does not ingress into the fuel tank and to ensure that the fuel contained within the fuel tank does not leak out. A leak of fuel is a serious problem. Firstly, it may mean that the aircraft does not have enough fuel in order to reach its destination. Secondly, there is a risk of an explosion should the fuel come into contact with a naked flame or spark or if spontaneous combustion occurs. There is therefore a mandatory safety requirement that the fuel tanks be well-sealed.

In the past two-component sealants have been mixed and applied to the fuel tank with a gun or a spatula. Controlled ambient conditions, a limited pot life as well as long curing times (usually 24 hours but can be longer depending on air humidity and temperature) are characteristic of this method. Polysulphide is an example of such a sealant. Furthermore, the sealants are difficult to remove when they have to be replaced. The replaced sealants have to be disposed after use with special waste techniques for poisonous waste.

O-rings made from fuel-resistant rubber have also been used to seal the fuel tank panels.

Previous work on fuel tank sealants at W.L. Gore & Associates has involved the use of sealant tapes sold under the name of SKYFLEX® and described in more detail in the German Patent Application DE-A-37 26 853 (Forrest et. al.) assigned to W.L.Gore & Associates. The SKYFLEX® sealant tapes are manufactured from expanded polytetrafluoroethylene (ePTFE). This material is chemically inert and not affected by any common chemical. It functions over a wide temperature range (-240°C to +260°C), does not age and is weather and UV resistant. The ePTFE used in SKYFLEX® sealant is manufactured by the GORE® expansion process. The result is a material which combines the above advantages with high pressure resistance and excellent conformability.

Such sealant tapes are resistant to the passage of aircraft fuel, such as kerosene, when they are heavily compressed. However, when the sealant tapes are only slightly compressed, it is possible for fuel to pass through the pores of the ePTFE. Since one can never be sure without extensive testing that the fuel tank sealant is sufficiently compressed throughout the circumference of the fuel tank panel, this has limited the use of SKYFLEX® sealant tapes for sealing fuel tanks.

Previous attempts at improving the fuel resistance of the sealant tapes has involved the coating of the ePTFE with a polyurethane coat. This work is described in the German Utility model DE--93 17 924 (Rüsch et al) issued to W.L.Gore & Associates.

Some previous work has been carried out by others to improve the properties of ePTFE and to make it more useful for use as a gasket in different applications. In WO-A-92/21715 (Chung) assigned to the Donaldson Company Inc. the use of ePTFE which has been treated with perfluoropolyether (PFPE) fluid prior to or after expansion as a mechanical seal is described. The inventor of this patent application recognised that the system described in this application offered improved radiation resistance properties. However, there is no hint in the patent application that mechanical seals made from this material are suitable for use in fuel tanks.

Similarly JP-A-61-163944 (Omori) assigned to Daikin Industry Ltd. teaches the incorporation of a PFPE compound into ePTFE for use as a diaphragm in a sensor. This patent application does not teach the use of the PFPE/PTFE system as a gasket.

The incorporation of both functionalised and non-functionalised PFPE in ePTFE is also taught in DE-A-43 08 369 (Bürger) assigned to W.L.Gore & Associates. This patent application teaches that the system possesses improved oleophobic properties. However, the disclosure fails to teach that this system might be suitable for use in a fuel tank gasket.

The US Patent US-A-4 028 324 (Tuschner et a.), assigned to United Technologies Corporation, illustrates a method for improving the chemical resistance of a sealant for a phosphoric electrochemical cell. The sealant used is an extruded seal material, the composition of which consists essentially of ePTFE, a halogenated oil, 0-5% by weight of a halogenated solvent and a filler stable in phosphoric acid and compatible with PTFE. This sealant is manufactured by mixing PTFE, fluorocarbon oil, solvent and filler in a mixer. After the components are mixed, it is allowed to dry and the solvent evaporates. The compound is afterwards extruded into the form of tape by means of a ram extruder. Extrusion from a ram extruder produces a very hard sealant which, unlike the SKYFLEX® sealants, cannot be overlapped and which is not conformable. It should be noted that the use of the word "fuel" in the Tuschner '324 patent is not synonymous with the use of the word "fuel" in the current patent.

The object of the invention is therefore to provide a sealant for use as a fuel tank gasket.

A further object of the invention is to provide an improved manufacturing method for a fuel tank gasket.

A further object of the invention is to provide a sealant made of microporous material which incorporates additives within the body of the microporous material.

This object is achieved by providing a sealant material which before use consists essentially of a) 30-90 % by weight porous base material and b) 10-70% by weight additive having the requirements that it is compatible with said porous material. The words "by weight" as used in the current patent refer to a weight of the sealant or of the additive as a proportion of the total weight of the sealant plus additive. This combination of materials is non-toxic and is easy to apply between two metal parts, requiring no special tools and no setting time. Furthermore the sealant material is easy and cheap to manufacture.

The additive used in the invention has preferably a group which is polar in nature. This aids the building of a film on the surface of the sealed parts to ensure that the passage of fuel is prevented. Furthermore, the polar groups of the additives are incompatible with fuel which is apolar in nature. The polar groups thus improve the fuel or oil repellancy of the sealant and hinder the diffusion of fuel through the pores of the porous base material.

The additive in the sealant material is selected from the group consisting of perfluoropolyethers, polysiloxane, butadiene-acrylonitrile co-polymers, polyesters and polyethers. It has been found that a particularly suitable additive is perfluoropolyether or a functionalised derivative thereof. This additive is easy to obtain. It is known from past work, see for example DE-A-43 08 369 (Bürger), that this imparts oleophobic properties to the ePTFE.

The additives are functionalised by the addition of a polar group selected from the group consisting of carboxylates, alcohols, mono-, di- and triesters of phosphoric acid, salts of phosphoric acids and carboxylic acids, urethanes, amines, ethers, isocyanates, esters, amides, maleic anhydride or acetates as well as fluorinated derivatives thereof.

The base sealant is typically selected from the group consisting of polytetrafluoroethylene and expanded polytetrafluoroethylene which have been shown to be non-toxic and highly effective sealants. However, it would be possible to use other sealant materials in this invention as long as they are porous. Examples of such materials are those produced by phase separation processes such as polycarbonates, polyvinylidene fluoride, polypropylene, polysulfone, nylon, cellulose acetates and thermoplastic polyurethanes.

Experiments have shown that the good fuel resistance results are obtained when the sealant material before use consists of a) 55-60% by weight expanded polytetrafluoroethylene and b) 40-45% by weight additive

The method for manufacturing the fuel tank gasket comprises the following steps:
a) a first step of manufacturing a porous base sealant material,
b) a second step of preparing an additive in a fluid phase,
c) a third step of applying said base sealant material to said fluid phase for a specified period of time and
d) a fourth step of drying to base sealant material to produce the fuel tank gasket.

Compared to the prior art methods, this provides a very cheap and easy method of manufacturing fuel tank gaskets.

In a preferred embodiment of the invention, the porous base sealant material is dipped into a solution, dispersion or suspension which is a mixture of a additive and a further liquid. This has been bound to be the most practical method of ensuring that the additive is absorbed into the body of the porous base sealant material. However, it would also be possible to spray, roll or brush the additive onto the surface of the porous base sealant material Experiments have shown that it is also possible to spray the pure additive in liquid form onto the surface of the porous base sealant material.

The mixture into which the porous base sealant material is dipped is a solution of additive in a solvent, dispersion or suspension. In one advantageous embodiment, the mixture is a solution in which the solute is the additive having the requirements that it is compatible with polytetrafluoroethylene and has a group which is polar in nature. The solvent is typically selected from the group consisting of alcohols, ketones, alkanes, water or perfluoropolyethers or mixtures thereof. In one advantageous embodiment of the invention, the solvent is an alcohol and the additive is perfluoropolyether. This combination allows the manufacture of effective fuel resistant sealants. The perfluoropolyether has the major advantage in that it is non-toxic and not detrimental to health. Furthermore, it is known that this material does not damage the ozone layer which is of great importance for sealants incorporated into aircraft flying high in the atmosphere.

Good results for manufacturing fuel tank gaskets have been found when said mixture consists of a) 20-80% by weight additive and b) 20-80% by weight solvent. More preferably, the mixture should comprise 60-70% by weight solvent and 30-40% by weight additive. The drying step (fourth step) in one embodiment of the invention comprises: a) a step of drying for a specified period of time at room temperature and pressure and b) a step of drying for a specified period of time in vacuum.

It would also be possible to heat the sealant material in order to speed up the drying process.

The manufactured sealant can be used as a system of two metal and/or plastic plates which are separated by the fuel tank gasket for sealing the space between the lid of a fuel tank and the side walls of a fuel tank. This system typically finds an application in transportation vehicles, such as an aircraft, in which fuel leakages present a serious problem. The manufactured sealant can furthermore be used as a sealant between dissimilar materials, such as plastic and metal.
Fig. 1 shows a side view of a fuel tank with a fuel tank gasket.
Fig. 2 shows one embodiment of the fuel tank gasket.
Fig. 3 shows a simplified overview of the apparatus used for manufacturing the sealant according to the invention.
Fig. 4 shows a graph of weight increase of the sealant against concentration of an additive in solution.
Fig. 5 shows an overview of the experimental apparatus used for testing the fuel tank sealant manufactured to this method.

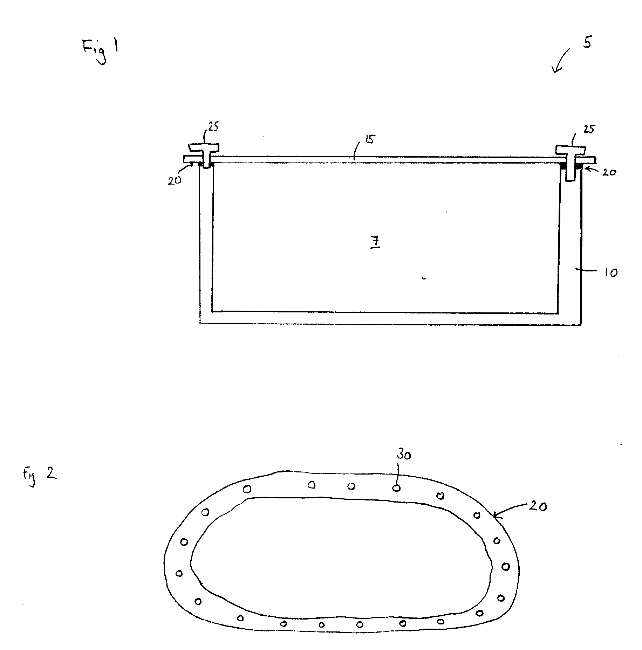

Fig. 1 shows a fuel tank 5 filled with a fuel 7, for example petrol, diesel or kerosene. The fuel tank 5 consists of a plurality of side walls 10 and a lid 15. A gasket 20 according to the invention is placed between the side walls 10 and the lid 15. The lid 15 is attached to the side wall 10 by a plurality of attachment elements 25, for example screws.

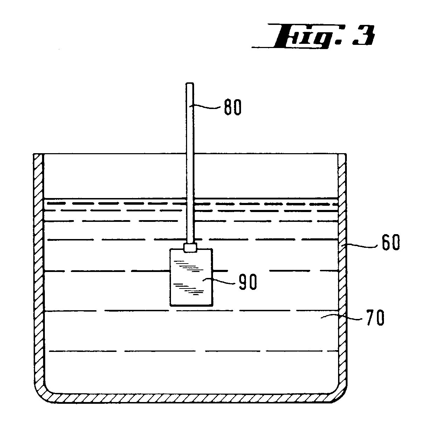

Fig. 2 shows an oval-shaped fuel gasket 20 according to the invention. The shape is immaterial to the function of the fuel gasket 20 and as depicted here is merely exemplary of shapes that can be used. The fuel tank gasket 20 according to the invention can also be supplied as a continuous band and not in closed form. The fuel tank gasket 20 is provided with a plurality of holes 30 through which the attachment elements 25 are inserted to attach the lid 15 onto the upper surface of the side walls 10.

The fuel tank 5 according to the invention can be assembled in the following manner. On the surface of the fuel tank gasket 20, an adhesive is laid and the fuel tank gasket 20 placed on the upper surface of the side walls 10. The adhesive used is a tape with adhesive provided on both sides of the tape. Most preferably, the tape used is a pressure-sensitive tape. A suitable tape for use is provided by 3M Corp. under the designation Scotch™ 1099. Other adhesive tapes can be used and it would also be possible to use glues, for example hot glue, which is spread in a thin film on the top surface of the side walls 10. This fuel tank gasket 20 can, as mentioned above, be either pre-formed or can be supplied as a continuous band.

After the fuel tank gasket 20 has been laid on the top surface of the side wall 10, the lid 15 is placed on top of the fuel tank gasket 20. The holes 30 of the fuel tank gasket 20 are lined up with holes in the upper surface of the side wall 10 and holes in the lid 15 to allow insertion of the attachment means 25. Pressure is applied to the top surface of the lid 15, for example by screwing down the attachment means 25, so that the fuel tank gasket 20 is compressed. In contradistinction to previous attempts at using a fuel tank gasket 20 made from ePTFE, it has been found that the fuel tank gasket 20 does not need to completely compressed in order to ensure that the fuel tank 5 is completely sealed such that the fuel 7 cannot leak out of the tank 5.

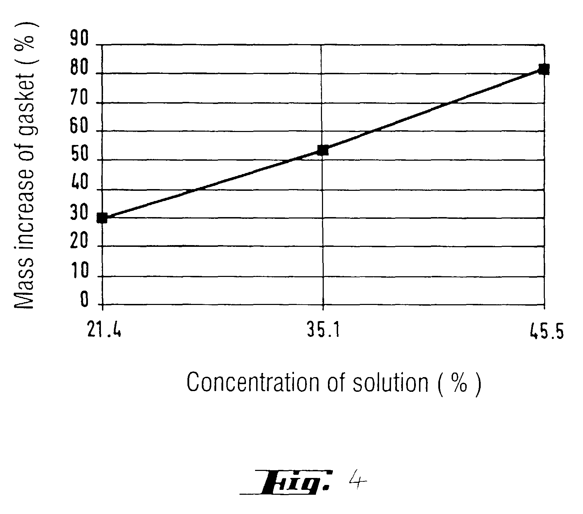

The apparatus used for the manufacture of the fuel tank gasket 20 according to the invention is depicted in Fig. 3. It consist of a vat 60 in which a solution 70 of an additive and a solvent is to be found. A sealant tape 90 for the fuel tank gasket 20 is dipped into the solution 70 by means of a holder 80.

Manufacture of the sealant according to the invention is carried out as follows. Firstly a sealant tape 90 is manufactured according to the known prior art methods. One example of such a sealant tape is the SKYFLEX® sealant tapes which are manufactured by W.L. Gore & Associates. In the preferred embodiment of the invention, SKYFLEX® GR sealant tape is used which has been redensified to a density of 0,5 g/cm³. However, sealant tapes with other densities can be used if required by the application.

In a second step an additive is mixed with a solvent in the vat 60. In one embodiment of the invention the additive used is polar PFPE (Perfluoropolyether) and the solvent used is isopropanol (IPA). Suitable PFPEs for this purpose are those supplied by Montefluos under the trade name FOMBLIN-Z® and those supplied by Ausimont (Deutschland) GmbH under the trade name GALDEN™. These examples are only meant to illustrate suitable materials for the performance of the invention. Further examples of suitable materials will be given later. The PFPEs used are preferably functionalised and have one or two head groups with the following general structure: 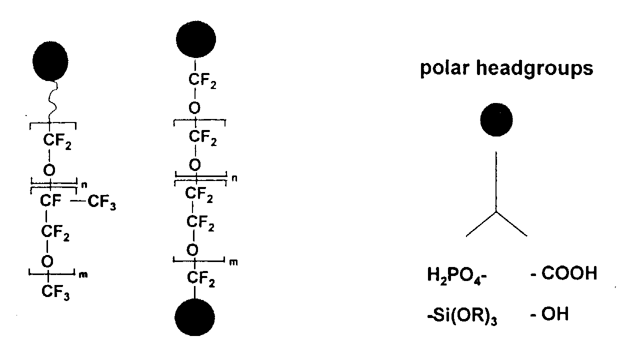 where R is an alkyl oxysilane.

In the preferred embodiment of the invention, the perfluoropolyether used is GALDEN™ MF201 and the solvent used is IPA.

The additives are not restricted to the depicted linear molecules. The effectiveness of the additives as a fuel-sealing material is ensured by the presence of oleophobic polymer chains with a low content of polar groups. Thus additives with a non-linear chain structure, for example a comb-like, star-like, cyclic or dendritic structure are contemplated to be also effective as additives.

It should be furthermore noted that the polar groups can be either attached at the end of the polymer chain or they can be incorporated in the main chain or side chains of the polymer.

One further class of additives which are contemplated to be effective as fuel sealants are fluoroacrylate-fluoromethacrylate copolymers functionalised with polar and/or ionic groups. Such systems are taught in US-A-4 929 666 (Schmitt et. al.). They can be used in a cross-linked and non-cross-linked form in order to obtain the desired fuel/oil repellancy.

The sealant tape 90 is then dipped into the solution 70 in the vat 60. In the preferred embodiment of the invention, the sealant tape 90 remains submerged 12 hours in the solution 70. The submergence time needs to be sufficiently long to ensure that the sealant tape 90 becomes saturated with the solution 70. The exact length of time depends not only on the concentration of the solution 70 but also on the geometry of the sealant tape 90 which is to be treated.

As is known, a material such as ePTFE has large voids within its structure. The solution 70 is absorbed within the voids. When these voids are completely filled, the sealant tape 90 can no longer absorb more solution 70. It is at this point that the sealant tape 70 can be removed from the solution. The length of time in which the sealant tape is kept in the solution can be shortened by stirring the solution 70 whilst the sealant tape 90 is in the vat 60 or by using ultrasound to promote mixing of the solution 70 and absorption by the sealant tape 90.

After removal from the solution 70, the sealant tapes 90 are dried. The length of drying also depends on the geometry of the sealant tape 90 and the components of the solution 70 as well as on the atmosphere in which the drying occurs. The sealant tape 90 should be dried for a sufficient length of time in order to ensure that all the solvent is evaporated from the sealant tape 90. The additives do not evaporate and remain trapped within the ePTFE structure. Warming the sealant tape 90 or placing it in vacuum will shorten the necessary drying time. In the preferred embodiment of the invention, the sealant tape 90 is dried for twelve hours at room temperature and pressure and then for six hours at a temperature of 50°C. After evaporation of the solvent, the sealant tapes 90 can be weighed. It is found that they have an increase in weight typically between 10% and 130%.

It has been found that the mass or weight increase of the sealant material manufactured by this invention can be controlled by altering the concentration of the additive in the solution 70. This is illustrated in Fig. 4.

In the example of Fig. 4, a GORE SKYFLEX® GO-TS-0008/4 sealant tape was placed in one of three types of solutions for three minutes and the solution stirred. The sealant tape was then dried for 12 hours at room temperature and pressure followed by two hours in an oil vacuum pump. The results from the three solutions can be summarised in Table 2.

**Table 2**

| Solution Number | Weight of PFPE MF201 (g) | Weight of IPA (g) | % wt PFPE in solution | Weight of SKYFLEX® before absorption (g) | Weight of SKYFLEX® after absorption (g) | % wt increase of SKYFLEX® |
|---|---|---|---|---|---|---|
| 1 | 15 | 55 | 21.4 | 6 | 7.8 | 30.0 |
| 2 | 20 | 37 | 35.1 | 7.7 | 11.8 | 53.2 |
| 3 | 25 | 30 | 45.5 | 7.2 | 13.1 | 81.9 |

As can be seen from the graph in Fig. 4 the weight increase of the sealant material is linearly proportional to the concentration of the additive in solution 70.

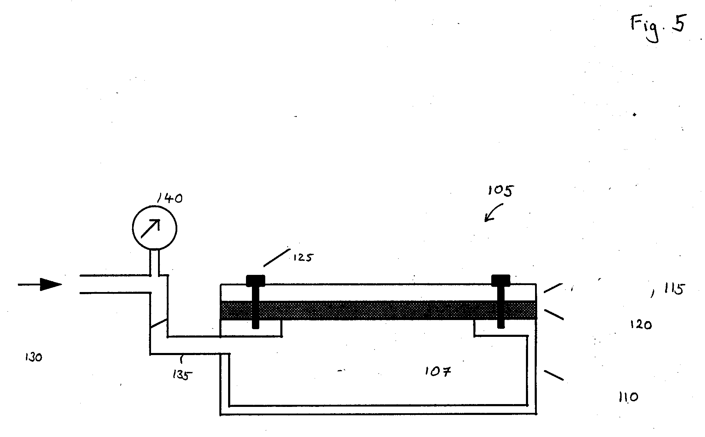

The fuel tank gasket 20 according to the current invention is tested by an apparatus such as that shown in Fig. 5. In this experimental set-up, a test fuel tank 105 is filled with aircraft fuel 107, such as kerosene. The test fuel tank 105 comprises a metal case 110 with a PMMA ("Plexiglas") lid 115 and fuel tank gasket 120 manufactured according to the above method. The pressure of the fuel 107 on the fuel tank gasket 120 is increased by increasing air pressure 130 applied to the surface of the aircraft fuel 107 through an opening 135 in a side wall of the metal case 110. The pressure applied to aircraft fuel 107 and thus to the fuel tank gasket 120 is measured by means of a pressure indicator 140. The fuel tank gasket 120 tested has a weight increase of 41.7% after absorption for twelve hours in a solution consisting of 34% MF201 and 66% IPA and drying at room temperature and pressure for twelve hours followed by drying at 50°C for six hours.

Table 3 shows the result of the experiment with increasing time:

**Table 3**

| **No** | **Date** | **Time** | **Description** | **Pressure (bar)** | **Temperature °C** | **Test Results** |
|---|---|---|---|---|---|---|
| 1 | 21.07.95 | 8:00 | Start of test | 0,3 | RT | |
| 2 | 24.07.95 | 8:00 | Panel removal | 0,3 | RT | No Leak |
| 3 | 24.07.95 | 13:00 | Panel removal | 0,3 | RT | No Leak |
| 4 | 25.07.95 | 8:00 | Panel removal | 0,3 | RT | No Leak |
| 5 | 25.07.95 | 13:00 | Panel removal | 0,3 | RT | No Leak |
| 6 | 26.07.95 | 8:00 | Panel removal | 0,3 | RT | No Leak |
| 7 | 26.07.95 | 13:00 | Panel removal | 0,3 | RT | No Leak |
| 8 | 27.07.95 | 8:00 | Panel removal | 0,3 | RT | No Leak |
| 9 | 27.07.95 | 13:00 | Panel removal | 0,3 | RT | No Leak |
| 10 | 28.07.95 | 8:00 | Panel removal | 0,3 | RT | No Leak |
| 11 | 28.07.95 | 13:00 | Panel removal | 0,3 | RT | No Leak |
| 12 | 31.07.95 | 8:00 | Panel removal | 0,5 | RT | No Leak |
| 13 | 31.07.95 | 13:00 | Panel removal | 0,5 | RT | No Leak |
| 14 | 01.08.95 | 8:00 | Panel removal | 0.8 | RT | No Leak |
| 15 | 01.08.95 | 13:00 | Panel removal | 0,8 | RT | No Leak |
| 16 | 02.08.95 | 8:00 | Panel removal | 0,8 | RT | No Leak |
| 17 | 02.08.95 | 13:00 | Panel removal | 0.8 | RT | No Leak |
| 18 | 03.08.95 | 8:00 | Panel removal | 1,0 | RT | No Leak |
| 19 | 03.08.95 | 13:00 | Panel removal | 1,0 | RT | No Leak |
| 20 | 04.08.95 | 8:00 | Panel removal | 0,0 | RT | No Leak |
| 21 | 12.10.95 | 9:00 | Start of Test | 1,0 | RT | No Leak |
| 22 | 13.10.95 | 10:00 | End of Test | 1,0 | RT | No Leak |

It can be seen that even after prolonged exposure to high pressure, the fuel tank sealant 120 manufactured according to this method does not leak. As a comparative example, a SKYFLEX® sealant without additive was tested under the same conditions. As soon as pressure was applied to the fule tank gasket 120, the fuel tank gasket 120 began to leak immediately.

It is thought that the method described above can be explained when it is understood that the additives fill in the voids between the node and fibre structure of the PTFE material, thus removing a path through which other fluids such as oil might flow. The additives should be oleophobic to ensure optimal fuel resistance.

In the above examples, the additive used to fill the sealant material was PFPE. However, the invention is not limited to the use of this type of additive.

It is thought that the following materials suitable for use as additives for incorporation into PTFE for manufacturing a fuel tank gasket according to the current invention.
- PFPE or functionalised PFPE. In particular PFPE which has been functionalised by the addition of a polar group such as carboxylate, alcohol, mono-, di- and triesters of phosphoric acid, salts of phosphoric and carboxylic acids, amine, amides, esters, ethers, isocyanates, and urethane. Such compounds are manufactured by Ausimont and sold under the trade names GALDEN, FORMBLIN and FLUOROLINK.
- Polysiloxane, functionalised polysiloxane or fluorinated polysiloxane. The same functional groups as listed above can be use. Polysiloxane is available from Wacker Chemie. Functionalised polysiloxanes are available from Wacker Chemie or Dow Chemicals. Fluorinated polysiloxanes are available from Hoechst under the trade name NUVA.,
- Butadiene-acrylonitrile co-polymers and functionalised butadiene-acrylonitrile co-polymers. These are available from Goodrich Chemical.
- Polyesters and polyethers as well as co-polymers or block co-polymers made from polyester, oligoester, polyether, oligoether, fluoroalkyls, siloxane or olefin units.
- Fluid or wax-like additives of low molecular weight such as silane, carboxylic acids and derivatives thereof (e.g. esters, salts and amides).

It is furthermore contemplated, that the additive could be added to the PTFE prior to the extrusion step.

The following can be used as solvents for the above listed additives:
- Alcohols (e.g. isopropanol IPA)
- Ketones, e.g. methylethylketone, methylbutylketone
- Chlorinated hydrocarbons e.g. methylene chloride, chloroform
- PFPE of low molecular weight
- Water
- Mixtures of the above solvents

In the description it has been assumed that the fluid used is a solution of a solvent and an additive. However, it would also be possible to use a dispersion or a suspension of the additive in an aqueous or alcohol base.

Furthermore it is possible to use other methods for applying the additive to the sealant material. For example, the additive could be sprayed, rolled or painted onto the surface of the sealant material from where it would be absorbed by the sealant material into the pores.

Furthermore, it has been assumed in this description that the base sealant material used is expanded polytetrafluoroethylene. However, other materials could be used as long as they have the characteristics that they are good sealant materials and are also sufficiently porous to allow absorption of the additive within the pores of the material. Examples of such materials are materials produced by phase separation processes, such as polycarbonate, polyvinylidene fluoride, polypropylene, polysulfone, nylon, cellulose acetates, and foams such as polyurethane or polysiloxane.

## Claims

1. Fuel tank gasket (20) which before use consists essentially of
a) 30-90 % by weight porous base material and
b) 10-70% by weight additive having the requirements that it is compatible with said porous material.

2. Fuel tank gasket (20) according to claim 1 wherein
said porous base material is selected from group consisting of polytetrafluoroethylene, expanded polytetrafluoroethylene, materials made from phase separation processes or polymer foams.

3. Fuel tank gasket (20) according to claim 1 wherein
said porous base material is expanded polytetrafluoroethylene.

4. Fuel tank gasket (20) according to claim 1 wherein
said additive has at least one group which is polar in nature.

5. Fuel tank gasket (20) according to claim 1 wherein
said additive is selected from the group consisting of perfluoropolyethers, polysiloxane, butadiene-acrylonitrile co-polymers, polyesters, polyethers as well as functionalised and fluorinated derivatives thereof.

6. Fuel tank gasket (20) according to claim 1 wherein
said additive is perfluoropolyether or a functionalised derivative thereof

7. Fuel tank gasket (20) according to claim 5 wherein
said additives have been functionalised by the addition of a polar group selected from the group consisting of carboxylates, alcohols, mono-, di- and triesters of phosphoric acid, salts of phosphoric or carboxylic acids, amines, amides, esters, ethers, isocyanates, urethanes and maleic anhydrides.

8. Fuel tank gasket (20) according to any of the above claims wherein the fuel tank gasket (20) before use consists of
a) 30-60% by weight expanded polytetrafluoroethylene
b) 40-70% by weight additive.

9. Fuel tank gasket (20) according to claim 8 wherein the fuel tank gasket (20) before use consists of
a) 55-60% by weight expanded polytetrafluoroethylene
b) 40-45% by weight additive.

10. Method for manufacturing fuel tank gasket (20)
a) a first step of manufacturing a porous base material (90)
b) a second step of preparing an additive (70) in fluid phase
c) a third step of applying said additive (70) to said porous base material (90)
d) a fourth step of drying the base fuel tank gasket (90).

11. Method according to claim 10 for manufacturing fuel tank gasket (20) wherein
said third step comprises dipping, spraying, rolling or brushing said porous base material (90) with said additive (70) in fluid phase.

12. Method according to claim 11 for manufacturing fuel tank gasket (20) wherein
said third step comprises dipping said porous base material (90) into said additive (70) in fluid phase.

13. Method according to claim 10 for manufacturing fuel tank gasket (20) wherein
said base fuel tank gasket (90) is selected from the group consisting of polytetrafluoroethylene, expanded polytetrafluoroethylene, materials made from phase separation processes or polymer foams.

14. Method according to claim 10 for manufacturing fuel tank gasket (20) wherein
said fluid phase is a solution, dispersion or suspension.

15. Method according to claim 14 for manufacturing fuel tank gasket (20 wherein
said fluid phase is a solution in which the solute is said additive having the requirements that it is compatible with said porous base material (90) and has at least one group which is polar in nature

16. Method according to one of claims 10 to 15 for manufacturing fuel tank gasket (20) wherein
said additive is selected from the group consisting of perfluoropolyethers, polysiloxane, butadiene-acrylonitrile co-polymers, polyesters, polyethers as well as functionalised and fluorinated derivatives thereof.

17. Method according to claim 16 for manufacturing fuel tank gasket (20) wherein
said additive is perfluoropolyether or a functionalised derivative thereof

18. Method according to one of claims 10 to 16 for manufacturing fuel tank gasket (20) wherein
said additives have been functionalised by the addition of a polar group selected from the group consisting of carboxylates, alcohols, mono-, di- and triesters of phosphoric acid, salts of phosphoric and carboxylic acids, amines, amides, esters, ethers, isocyanates, urethanes and maleic anhydrides.

19. Method according to claim 10 for manufacturing fuel tank gasket (20) wherein
the solvent is selected from the group consisting of alcohols, ketones, alkanes, water and perfluoropolyethers of low molecular weight or mixtures thereof.

20. Method according to claim 15 for manufacturing fuel tank gasket (20) wherein
the solvent is an alcohol.

21. Method according to one of claims 10 to 20 for manufacturing fuel tank gasket (20) wherein said mixture consists of
a) 20-80% by weight additive and
b) 20-80% by weight solvent.

22. Method according to claim 21 for manufacturing fuel tank gasket (20) wherein said mixture consists of
a) 30-40% by weight additive and
b) 60-70% by weight solvent.

23. Method according to claims 10 to 22 for manufacturing fuel tank gasket (20) wherein the fourth step comprises
a) a step of drying for a specified period of time at room temperature and pressure
b) a step of drying for a specified period of time in vacuum.

24. Method according to claims 10 to 22 for manufacturing fuel tank gasket (20) wherein the fourth step comprises
a) a step of drying for 12 hours at room temperature and pressure
b) a step of drying for six hours at 50°C.

25. Method according to claims 10 to 24 for manufacturing fuel tank gasket (20) wherein the fourth step comprises
warming the porous base material

26. Fuel tank gasket (20) manufactured by the method of one of claims 10 to 25.

27. Fuel tank (5) comprising a side wall (10) and lid (15) wherein the lid (5) is attached by means of attachment means (25) to the side wall (10) and is sealed by means of a fuel tank gasket (20) according to any of claims 1 to 9 or 26.

28. Transportation vehicles, such as an aircraft, in which the fuel tank (5) of claim 26 is incorporated.
